# EUROPÄISCHE PATENTSCHRIFT

(11) **EP 3 313 776 B1**
(45) Veröffentlichungstag und Bekanntmachung des Hinweises auf die Patenterteilung: **11.12.2019**
(21) Anmeldenummer: 16729251.5
(22) Anmeldetag: 13.06.2016
(51) Int. Cl.: B67C 3/28

(54) **FÜLLSYSTEM ZUM BEFÜLLEN VON PACKMITTELN**
FILLING SYSTEM FOR FILLING OF CONTAINERS
SYSTEME DE REMPLISSAGE POUR REMPLISSAGE DE RECIPIENTS

(30) Priorität: 23.06.2015 DE 102015110063
(43) Veröffentlichungstag der Anmeldung: 02.05.2018
(73) Patentinhaber: KHS GmbH, 44143 Dortmund (DE)
(72) Erfinder: KRULITSCH, Dieter-Rudolf, 55545 Bad Kreuznach (DE)
(86) Internationale Anmeldenummer: PCT/EP2016/063457
(87) Internationale Veröffentlichungsnummer: WO 2016/207005

(56) Entgegenhaltungen:
- WO-A1-2013/057695
- DE-A1- 4 207 346
- DE-A1-102012 211 926
- DE-A1-102013 106 927
- DE-B- 1 105 746

## Beschreibung

Die Erfindung bezieht sich auf Füllelemente gemäß Oberbegriff Patentanspruch 1 sowie auf Füllsysteme oder Füllmaschinen gemäß Oberbegriff Patentanspruch 15. Füllelemente zur gesteuerten, beispielsweise zur füllhöhen- und/oder volumengesteuerten Abgabe, von flüssigen Produkten oder Füllgütern in Packmittel sind in zahlreichen Ausführungen bekannt, wobei diese Füllelemente grundsätzlich jeweils wenigstens einen an zumindest einer Abgabeöffnung für das Füllgut mündenden Flüssigkeitskanal und wenigstens ein in diesem Flüssigkeitskanal angeordnetes Flüssigkeitsventil aufweisen, welches beim Befüllen gesteuert geöffnet und geschlossen wird. Das Flüssigkeitsventil besteht dabei in der Regel aus einem Ventilkörper, der zumindest teilweise im Flüssigkeitskanal angeordnet ist und von dem Füllgut umströmt mit einem ebenfalls im Flüssigkeitskanal vorgesehenen Ventilsitz zusammenwirkt, gegen den der Ventilkörper bei geschlossenem Flüssigkeitsventil anliegt und von dem der Ventilkörper bei geöffnetem Flüssigkeitsventil unter Freigabe wenigstens einer Ventilöffnung beabstandet ist. Bei einer Vielzahl bekannter Füllelemente wird beim Öffnen und Schließen des Flüssigkeitsventils der Ventilkörper, der dann beispielsweise an einem ebenfalls zumindest mit einer Teillänge im Flüssigkeitskanal angeordneten ventilstößelartig wirkenden Bauteil vorgesehen ist, durch eine Betätigungseinrichtung in einer Ventil- oder Hub-Achse bewegt.

Vorgeschlagen wurde auch bereits, für diese Öffnungs- und Schließbewegung des Ventilkörpers einen elektromagnetischen Linearantrieb vorzusehen (WO 2013/057695 A1), bei dem dann der Ventilkörper den Läufer bildet, der von dem Magnetfeld einer elektromagnetischen Wicklung geradlinig bewegt wird. Entscheidend ist bei diesen Füllelementen, dass das elektrisch erzeugte Magnetfeld unmittelbar auf den vom Ventilkörper gebildeten Läufer des Linearantriebes einwirkt und den Ventilkörper unmittelbar bewegt, und zwar ohne dass zusätzliche mechanische Bauteile, wie insbesondere Stößel artige Bauteile usw., erforderlich sind, die eine antriebsmäßige Verbindung zwischen einem Antrieb und dem Ventilkörper herstellen. Nachteilig ist allerdings, dass der, zwischen dem Läufer und der elektromagnetischen Wicklung erforderliche Magnetspalt von einem den Ventilkörper umschließenden und von dem Füllgut durchströmten Teil des Flüssigkeitskanals gebildet ist, für den zur Erzielung einer ausreichend hohen Füllleistung, aber auch bei einem Füllgut, welches feste Partikel, beispielsweise Fruchtstücke oder Fruchtfasern enthält, ein ausreichend großer Strömungsquerschnitt erforderlich ist. Dieses bedingt einen relativ breiten Magnetspalt, wodurch die Betriebssicherheit des betreffenden Füllelementes stark beeinträchtigt wird. Nachteilig ist weiterhin auch, dass innerhalb des Produktraumes, d.h. innerhalb des Flüssigkeitskanals Gleitführungen für den bewegten Ventilkörper erforderlich sind und sich diese nur schlecht oder arbeitsaufwendig reinigen lassen.

Bekannt ist weiterhin ein Füllelement gemäß dem Oberbegriff des Anspruchs 1 (DE 10 2013 106 927 A1), bei dem das Flüssigkeitsventil im Wesentlichen aus einem im Flüssigkeitskanal angeordneten und von dem Füllgut umströmten Ventilkörper, der zum Öffnen und Schließen des Flüssigkeitsventils nicht bewegt wird, und aus einem als Mantelrohr ausgebildeten Ventilelement besteht, welches den Ventilkörper auf einer Teillänge mit Abstand umschließt und an welchem ein mit dem Ventilkörper zusammenwirkender, von einer Dichtungsmembrane gebildeter Ventilsitz vorgesehen ist. Zum Öffnen und Schließen des Flüssigkeitsventils wird dieser Ventilkörper, der an einem Gehäuseabschnitt des Füllelementes geführt ist, in der Ventil- oder Hub-Achse zwischen einer Schließposition, in der zum Schließen des Flüssigkeitsventils der Ventilsitz gegen den Ventilkörper anliegt, und in einer Position bewegt, der zum Öffnen des Flüssigkeitsventils und zur Freigabe einer zwischen den Ventilsitz und dem Ventilkörper gebildeten Ventilöffnung der Ventilsitz vom Ventilkörper beabstandet ist. Die Bewegung des Ventilelementes erfolgt pneumatisch durch Beaufschlagung von Steuerkammern mit Druckluft, die zwischen einer Innenfläche des Ventilkörpers und einer Außenfläche eines Gehäuseabschnittes des Füllelementes gebildet sind. Nachteilig hierbei ist insbesondere, dass für das Öffnen und Schließen des Flüssigkeitsventils eine zusätzliche Pneumatik erforderlich ist, so u.a. eine Druckluftquelle, Pneumatikleitungen, elektropneumatische Steuerventile usw.

DE 1105746 zeigt ein weiteres Füllelement mit magnetischem Antrieb.

Aufgabe der Erfindung ist es, ein Füllelement aufzuzeigen, welches es ermöglicht, Füllsysteme bei hoher Betriebssicherheit mit einem in konstruktiver Hinsicht und in steuerungstechnischer Hinsicht reduzierten Aufwand zu realisieren, insbesondere auch Füllsysteme zum Abfüllen von Füllgütern oder Produkten, die feste Bestandteile enthalten, wie beispielsweise Produkte in Form von Fruchtsäften mit Fruchtstücken, Fruchtfasern usw. Zur Lösung dieser Aufgabe ist das jeweilige Füllelement entsprechend dem Patentanspruch 1 ausgebildet. Ein Füllsystem oder eine Füllmaschine ist Gegenstand des Patentanspruchs 15.

Bei dem erfindungsgemäßen Füllelement ist der Antrieb für das Öffnen und Schließen des wenigstens einen Flüssigkeitsventils ebenfalls ein magnetischer oder elektromagnetischer Antrieb, der bzw. dessen Magnetfeld allerdings nicht auf den zum Öffnen und Schließen nicht bewegten Ventilkörper des wenigstens einen Flüssigkeitsventils einwirkt, sondern unmittelbar auf das, den Ventilsitz bildende oder aufweisende und rohrstückartig oder als Mantelrohr ausgebildete Ventilelement. Dieses Ventilelement oder ein an dem Ventilelement vorgesehenes Element bildet den Läufer des magnetischen oder elektromotorischen bzw. elektromagnetischen Antriebs. Der wenigstens eine Magnetspalt des Antriebs befindet sich dann vollständig außerhalb des Flüssigkeitskanals an einer Außenfläche des Ventilelementes, bevorzugt zwischen der beweglichen Außenfläche des Ventilelementes und einem Gehäuseteil des Füllelementes, der für das Öffnen und Schließen des wenigstens einen Flüssigkeitsventils nicht bewegt wird oder bewegt werden muss. An diesem Gehäuseteil ist dann auch bevorzugt der als Stator ausgebildete nicht bewegte Teil des elektromagnetischen Antriebs vorgesehen.

Bei einer vereinfachten Ausführungsform des erfindungsgemäßen Füllelementes umfasst der elektromotorische oder elektromagnetische Antrieb wenigstens zwei Magnetspulen, die bevorzugt den Stator bilden und so in Richtung der Ventil- oder Hubachse gegeneinander versetzt sind, dass beim Aktivieren der einen Magnetspule das Ventilelement in die das Flüssigkeitsventil sperrende Stellung und beim Aktivieren der anderen Magnetspule in die, das Flüssigkeitsventil öffnende Stellung bewegt wird. Für die meisten Anwendungen ist es völlig ausreichend, wenn das betreffende Füllelement nur diese beiden Zustände aufweist.

Bei einer weiteren Ausführungsform des erfindungsgemäßen Füllelementes ist der elektromotorische oder elektromagnetische Antrieb für das Öffnen und Schließen des wenigstens einen Flüssigkeitsventils ein elektromotorischer oder elektromagnetischer Linearmotor oder Linearantrieb, z.B. mit Gleichstromantrieb oder aber mit Synchron-Wechselstromantrieb. Der Läufer dieses Linearantriebs ist dann wiederum das den Ventilsitz aufweisende oder bildende Ventilelement, welches von dem elektrisch erzeugten Magnetfeld des Antriebs unmittelbar geradlinig in der Ventil- oder Hub-Achse bewegt wird, und zwar ohne zur Hilfenahme anderer mechanischer Bauteile. Auch in diesem Fall befindet sich der erforderliche Magnetspalt vollständig außerhalb des Flüssigkeitskanals und wird von dem Füllgut nicht durchströmt. Die das Magnetfeld erzeugende Wicklung bildet auch bei dieser Ausführung bevorzugt den Stator oder die Statorwicklung.

Bei Ausbildung des elektromagnetischen Antriebs als Linearantrieb oder Linearmotor ist rein elektrisch gesteuert zusätzlich zu dem vollständig geöffneten und vollständig geschlossenen Zustand ein Zustand des wenigstens einen Flüssigkeitsventils möglich, bei dem dieses nur mit reduziertem Strömungsquerschnitt geöffnet ist. Weiterhin kann auch der Verlauf der Öffnungs- und Schließbewegung des Ventilelementes rein elektrisch gesteuert werden. Das vorliegende Flüssigkeitsventil kann daher die Funktion eines Stromregelventils übernehmen.

Unabhängig von der jeweiligen Ausbildung im Detail kann der Magnetspalt bei dem erfindungsgemäßen Füllelement extrem schmal ausgeführt werden, wodurch es nicht nur möglich ist, diesen Magnetspalt für die Führung des beweglichen Ventilelementes zu nutzen, sondern hierdurch wird auch eine hohe Betriebssicherheit beim Öffnen und Schließen des Füllelementes erreicht.

"Packmittel" sind im Sinne der Erfindung Verpackungen oder Behältnisse, die z.B. im Lebensmittelbereich und dabei speziell auch im Getränkebereich üblicherweise verwendet werden, und zwar insbesondere Behälter, wie z. B. Flaschen, Dosen, auch Weichverpackungen, beispielsweise solche hergestellt aus Karton und/oder Kunststofffolie und/oder Metallfolie.

Unter "Freistrahlfüllen" ist im Sinne der Erfindung insbesondere ein Verfahren zu verstehen, bei dem das flüssige Produkt oder Füllgut dem zu befüllenden Packmittel in einem freien Füllstrahl zuströmt, wobei das Packmittel mit seiner Mündung oder Öffnung nicht am Füllelement anliegt, sondern von dem Füllelement bzw. von einem dortigen Füllgutauslass beabstandet ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
Fig. 1 in schematischer Darstellung ein Füllelement gemäß der Erfindung im geöffneten Zustand, zusammen mit einem zu befüllenden Packmittel in Form von eines Behälters;
Fig. 2 in vergrößerter Teildarstellung das Füllelement der Figur 1 im geschlossenen Zustand;
Fig. 3 - 5 ebenfalls in vereinfachten schematischen Darstellungen und im Schnitt weitere Ausführungsformen des erfindungsgemäßen Füllelementes;
Fig. 6 in schematischer Darstellung ein Füllelement gemäß der Erfindung in geöffnetem Zustand, welches als Doppel- oder Mehrfachfüllventil ausgebildet ist und somit mit nur einer Antriebseinheit mindestens zwei Füllventile betätigt.

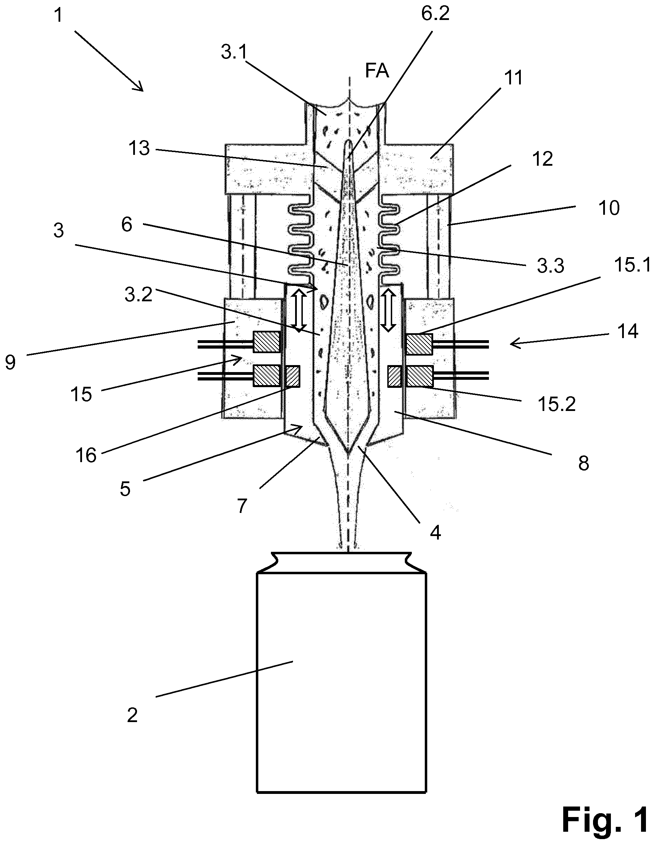

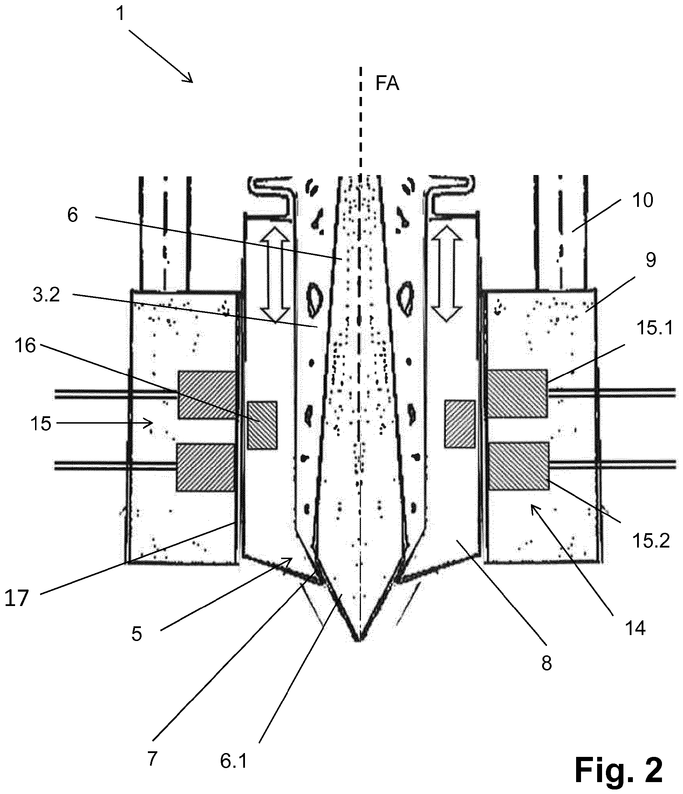

In den Figuren 1 und 2 ist 1 ein Füllelement zum gesteuerten Befüllen von Behältern 2 mit einem flüssigen Produkt oder Füllgut, welches beispielsweise auch festere Bestandteile enthält, wie beispielsweise Fruchtfasern oder Fruchtfleisch eines von einem Fruchtsaft gebildeten Füllgutes oder Produktes. Der Behälter 2 ist beispielhaft als Dose dargestellt, könnte aber auch ein anderes zum Abfüllen von flüssigen Produkten geeignetes Packmittel sein.

Das Füllelement 1 ist im Verwendungsfall Bestandteil eines Füllsystems, welches vorzugsweise weitere gleichartige Füllelemente 1 aufweist, beispielsweise ist das Füllelement 1 Bestandteil einer Füllmaschine umlaufender Bauart, bei der es in der dem Fachmann bekannten Weise zusammen mit einer Vielzahl gleichartiger Füllelemente am Umfang eines um eine vertikale Maschinenachse umlaufend antreibbaren Rotors vorgesehen ist. Das Füllelement 1 ist für ein Freistrahlfüllen der Behälter 2 ausgebildet.

Im Füllelement 1 ist ein Flüssigkeitskanal 3 ausgebildet, der bei der dargestellten Ausführungsform mit seinem oberen Ende bzw. mit einem dortigen Abschnitt 3.1 mit einem nicht dargestellten, das Füllgut bereitstellenden Füllgutkessel verbunden ist und an der Unterseite des Füllelementes 1 eine Abgabeöffnung 4 bildet. Im Flüssigkeitskanal 3 ist ein Flüssigkeitsventil 5 mit einem Ventilköper 6 vorgesehen, der mit einem im Flüssigkeitskanal 3 ausgebildeten Ventilsitz 7 zusammenwirkt, und zwar derart, dass bei geöffnetem Flüssigkeitsventil 5 der Ventilsitz 7 vom Ventilkörper 6 oder dem Ventilkörperabschnitt 6.1 beabstandet ist (Figur 1) und bei geschlossenem Flüssigkeitsventil 5 der Ventilkörper gegen den Ventilsitz 7 anliegt.

Bei der dargestellten Ausführungsform ist der Ventilsitz 7 an der Innenfläche eines als beidendig offenes Rohrstück oder als Mantelrohr ausgebildeten und den Ventilkörper 6 umschließenden Ventilelementes 8 ausgebildet, welches mit seinem Inneren auch den in Strömungsrichtung des Füllgutes vor der Abgabeöffnung 4 befindlichen Abschnitt 3.2 des Flüssigkeitskanals 3 bildet und welches zum Öffnen und Schließen des Flüssigkeitsventils 5 in einer Ventil- oder Hub-Achse FA, d.h. bei der dargestellten Ausführungsform in einer vertikalen oder im Wesentlichen vertikalen Füllelementachse zumindest um einen vorgegebenen Hub bewegbar ist, sodass in der einen Hubstellung bei geöffnetem Flüssigkeitsventil 5 der Ventilsitz 7 vom Ventilkörper 6 zur Freigabe einer Ventilöffnung beabstandet (Figur 1) und in der andere Hubstellung der Ventilkörper mit seinem bei der dargestellten Ausführungsform sich kegelförmig verjüngenden untere Ventilkörperabschnitt 6.1 zum Schließen der Ventilöffnung gegen den Ventilsitz 7 anliegt (Figur 2).

Das Ventilelement 8 ist in einem Gehäuseteil 9, beispielsweise in einem ringförmigen Gehäuseteil 9 in der Hub-Achse, d.h. bei der dargestellten Ausführungsform in der Füllelementachse FA verschiebbar geführt. Das Gehäuseteil 9 ist beispielsweise über mehrere Verbindungselemente 10 oder Verbindungsstangen mit einem darüber liegenden Gehäuseteil 11 verbunden, mit welchem das Füllelement 1 beispielsweise an einem Maschinenelement, z.B. an dem nicht dargestellten Füllgutkessel oder Rotor des Füllsystems befestigt ist und in welchem der, der Abgabeöffnung 4 entfernte und bei der dargestellten Ausführungsform obere Abschnitt 3.1 des Flüssigkeitskanals 3 ausgebildet ist. Zwischen dem Gehäuseteil 11 und dem diesen Gehäuseteil zugewandten Ende des Ventilelementes 8 ist eine flexible, die Bewegung des Ventilelementes 8 ermöglichende Verbindung oder Dichtung 12 in Form eines Faltenbalgs oder einer Faltenbalgdichtung vorgesehen. Die Dichtung 12 umschließt den Ventilkörper 6 ebenfalls mit Abstand. In der Dichtung 12 ist ein die Abschnitte 3.1 und 3.2 verbindender Abschnitt 3.3 des Flüssigkeitskanals 3 ausgebildet.

Der Ventilkörper 6 ist mit seinem dem Ventilkörperabschnitt 6.1 entfernt liegenden und bei der dargestellten Ausführungsform oberen Ende 6.2 über mehrere Stege 13 im Gehäuseteil 11 bzw. im Abschnitt 3.1 des Flüssigkeitskanals 3 gehalten, sodass der Ventilkörper 6 vom Füllgut umströmt werden kann und im Gegensatz zum Ventilelement 8 beim Öffnen und Schließen des Flüssigkeitsventils 5 nicht oder im Wesentlichen nicht bewegt wird.

Das Öffnen und Schließen des Flüssigkeitsventils 5 erfolgt bei dem Füllelement 1 durch einen elektromagnetischen Antrieb 14. Hierfür sind am oder im Gehäuseteil 9, welches beispielsweise aus einem nicht magnetischen Material, z.B. aus Kunststoff besteht, zwei in Form elektrischer Ringspulen ausgebildete Magnetspulen 15.1 und 15.2 einer Magnetspulenanordnung 15 bzw. Ringspulenanordnung oder eines Stators des Antriebs 14 in Richtung der Ventil- oder Hubachse FA des Ventilelementes 8, d.h. in Richtung der Füllelementachse gegeneinander versetzt vorgesehen, und zwar derart, dass die Ringspule 15.1 einen größeren axialen Abstand vom Ventilkörperabschnitt 6.1 aufweist als die Ringspule 15.2. Die Ringspulen 15.1 und 15.2, die die Hub-Achse des Ventilelementes 8 konzentrisch umschließen, wirken mit dem Ventilelement 8 bzw. mit wenigstens einem dort vorgesehenen, in Form eines Permanentmagneten ausgebildeten Element 16 derart zusammen, dass sich das Flüssigkeitsventil 5 bei aktivierter Ringspule 15.2 und nicht aktivierter Ringspule 15.1 im geöffnetem Zustand (Figur 1) und bei aktivierter Ringspule 15.1 und nicht aktivierter Ringspule 15.2 im geschlossenen Zustand (Figur 2) befindet. Die Anordnung der Ringspule 15.1 und des wenigstens einen Permanentmagneten 16 ist dabei bevorzugt so getroffen, dass sich im geschlossenen Zustand des Flüssigkeitsventils 5 der wenigstens eine Permanentmagnet 16 noch nicht vollständig innerhalb der Ringspule 15.1 befindet. Hierdurch ist sichergestellt, dass der Ventilsitz 7 für ein dichtes und sicheres Schließen des Flüssigkeitsventils 5 mit einer erforderlichen Vorspannung oder Schließkraft gegen den Ventilkörperabschnitt 6.1 anliegt.

Grundsätzlich ist es auch möglich, dass bei dem Füllelement 1 mehr als zwei Ringspulen vorgesehen sind, um so beispielsweise zusätzlich zu dem Schließzustand und dem vollständig geöffneten Zustand einen Zustand des Flüssigkeitsventils 5 zu ermöglichen, in dem dieses oder dessen Ventilöffnung nur mit einem reduzierten Strömungs- oder Öffnungsquerschnitt geöffnet sind. Der Magnetspalt 17 des Antriebs 14, d.h. der Magnetspalt 17 zwischen der Magnetspulenanordnung 15 und dem Ventilelement 8 befindet sich an der Außenfläche des Ventilelementes 8 und damit außerhalb des Flüssigkeitskanales 3.

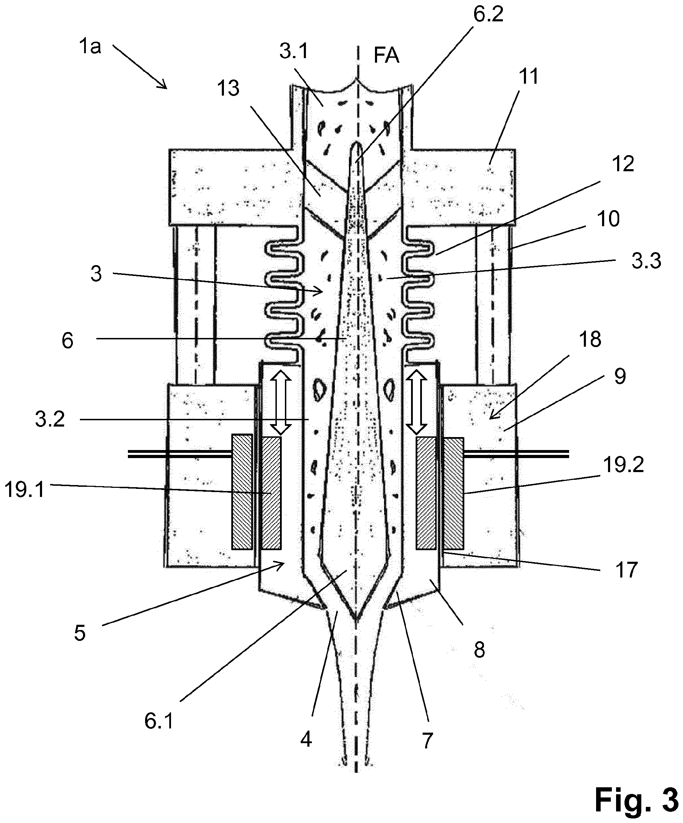

Die Figur 3 zeigt als weitere Ausführungsform ein Füllelement 1a, welches sich von dem Füllelement 1 im Wesentlichen nur dadurch unterscheidet, dass die Bewegung des Ventilelementes 8 relativ zum Ventilkörper 6 durch einen elektrischen Linearmotor oder -antrieb 18 erfolgt, bei dem das Ventilelement 8 als Läufer dieses Antriebs ausgebildet ist, beispielsweise mit einem als Magnetpolanordnung ausgebildeten Element 19.1, das eine Vielzahl von in Richtung der Hub-Achse aufeinander folgenden Magnetpolen, beispielsweise gebildet von Permanentmagneten, mit abwechselnd unterschiedlicher Polarität aufweist. An dem Gehäuseteil 9 ist eine elektromagnetische Wicklung 19.2 des Linearantriebes 18 vorgesehen, die den Stator oder die Statorwicklung bildet. Der Linearantrieb 18 hat u.a. zusätzlichen den Vorteil, dass das Ventilelement 8 aus seiner Schließstellung gesteuert in nahezu jede beliebige Position zwischen dieser Schließstellung und der vollständig geöffneten Stellung bewegt werden und/oder dass die Geschwindigkeit des Öffnens und/oder Schließen des Flüssigkeitsventils 5 elektrisch gesteuert werden kann. Der Magnetspalt 17 des Linearantriebs 18, d.h. der Magnetspalt 17 zwischen der Magnetanordnung 19.1 und der Außenfläche des Ventilelementes 8 bzw. der Wicklung 19.2 befindet sich wiederum außerhalb des Flüssigkeitskanales 3.

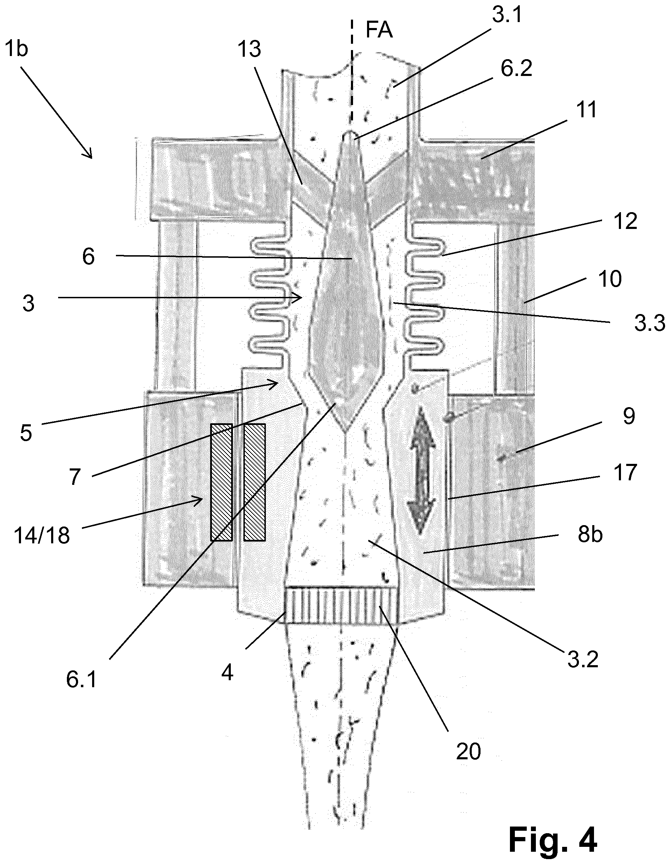

Die Figur 4 zeigt als weitere Ausführungsform der Erfindung ein Füllelement 1b, welches sich von den Füllelementen 1 und 1a im Wesentlichen nur dadurch unterscheidet, dass bei dem dortigen, dem Ventilelement 8 entsprechenden Ventilelement 8b der mit dem Ventilkörper 6 zusammenwirkende Ventilsitz 7 an dem der Abgabeöffnung 4 entfernt liegenden und bei der dargestellten Ausführungsform oberen Bereich des Ventilelementes 8b ausgebildet ist und dass in der Abgabeöffnung 4 eine Gassperre 20 vorgesehen ist, die siebartig ausgebildet nach dem Schließen des Flüssigkeitsventils 5 ein Nachfließen oder Nachtropfen von Füllgut aus dem im Ventilelement 8b ausgebildeten Abschnitt 3.2 des Flüssigkeitskanals 3 verhindert. Die Bewegung des Ventilelementes 8b relativ zu dem nicht bewegten Ventilkörper 6 beim Öffnen und Schließen des Flüssigkeitsventils 5 erfolgt auch bei dieser Ausführungsform wiederum elektromagnetisch z.B. über den Antrieb 14 oder über den Linearantrieb 18.

Den Füllelementen 1, 1a und 1b ist gemeinsam, dass der mit dem Ventilkörperabschnitt 6.1 zusammenwirkende Ventilsitz 7 innerhalb des Ventilelementes 8 bzw. 8b vorgesehen ist und bezogen auf die Ventil- oder Hub-Achse FA von dem die wenigstens eine Abgabeöffnung 4 bildenden oder diese Abgabeöffnung näher liegenden Ende des Ventilelementes 8 bzw. 8b einen axialen Abstand aufweist, der kleiner ist als die axiale Länge des Ventilelementes 8 bzw. 8b, wobei bei den Füllelementen 1, 1a dieser Abstand kleiner ist als die halbe axiale Länge des Ventilelementes 8 und bei dem Füllelement 1b größer ist als die halbe axiale Länge des Ventilelementes 8b.

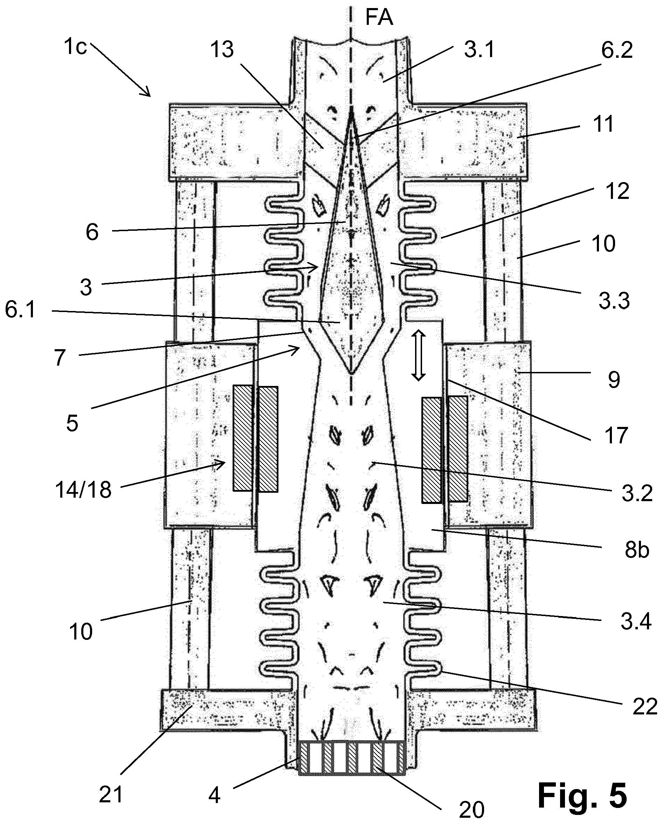

Die Figur 5 zeigt als weitere Ausführungsform der Erfindung ein Füllelement 1c, welches sich von dem Füllelement 1b im Wesentlichen nur dadurch unterscheidet, dass die Abgabeöffnung 4, die beispielsweise wiederum mit der Gassperre 20 versehen ist, sich an einem unteren Gehäuseteil 21 befindet, welches über die Verbindungsstangen 10 mit dem Gehäuseteil 9 und auch mit dem oberen Gehäuseteil 11 verbunden ist. Der Flüssigkeitskanal 3 weist bei dieser Ausführungsform an den im Ventilelement 8b ausgebildeten Abschnitt 3.2 anschließend einen weiteren Abschnitt 3.4 auf, der an der Abgabeöffnung 4 mündet und innerhalb einer das Ventilelement 8b mit dem Gehäuseteil 21 verbindenden und die Bewegung des Ventilelementes 8b ermöglichenden flexiblen Verbindung oder Dichtung 22 ausgebildet ist, die bei der dargestellten Ausführungsform ebenfalls ein Faltenbalg oder eine Faltenbalgdichtung ist.

Die Betätigung des Ventilelementes 8b relativ zu dem nicht bewegten Ventilkörper 6 erfolgt bei dieser Ausführungsform ebenfalls elektromagnetisch, beispielsweise durch den Antrieb 14 oder durch den Linearantrieb 18. Da die Abgabeöffnung 4 an einem festen Gehäuseteil 21 ausgebildet ist, eignet sich das Füllelement 1c auch für Füllsysteme, bei denen das Füllgut dem jeweiligen Behälter 2 nicht in einem freien Strahl zufließt, sondern der jeweilige Behälter 2 beim Füllen mit seiner Behälteröffnung gegen die Unterseite des Füllelementes 1c anliegt, beispielsweise auch in Dichtlage an den Füllelement 1c vorgesehen sind.

Es versteht sich, dass die Füllelemente 1a - 1c im Verwendungsfall ebenfalls Bestandteil von Füllsystemen sind, die bevorzugt mehrere gleichartige Füllelemente aufweisen, beispielsweise Bestandteil von Füllmaschinen umlaufender Bauart mit den an einem umlaufenden Rotor vorgesehenen Füllelementen.

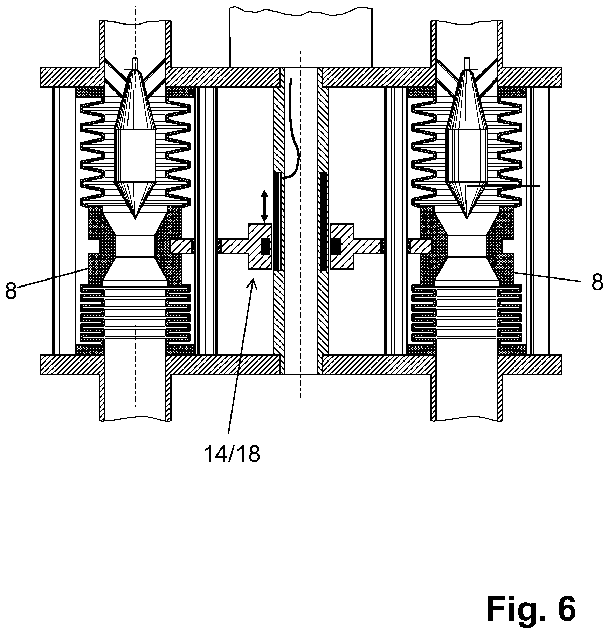

Die Fig. 6 zeigt als weiteres Ausführungsbeispiel ein Füllelement gemäß der Erfindung welches zur Betätigung von zwei Ventilelementen 8 lediglich einen Antrieb 14 oder einen Linearantrieb 18 vorsieht. Durch diese Vorgehensweise lassen sich erhebliche Kostenvorteile realisieren. Diese Kostenvorteile lassen sich dadurch steigern, dass auch mehr als zwei Ventilelemente 8 mit nur einem Antrieb 14 oder Linearantrieb 18 bewegt werden. Dabei ist es auch möglich, dass drei Ventilelemente 8 von zwei Antrieben 14 oder von zwei Linearantrieben 18 bewegt werden.

Allen Ausführungsformen der Erfindung ist gemeinsam, dass in vorteilhafter Weise mechanische, in der Regel auch im Flüssigkeitskanal 3 angeordnete Betätigungselemente, beispielsweise ventilstößelartige Ventilelemente, sowie pneumatische Betätigungselemente zum Öffnen und/oder Schließen des Flüssigkeitsventils 5 vermieden sind und dass das Öffnen und/oder Schließen des Flüssigkeitsventils 5 vielmehr elektromagnetisch erfolgt. In besonders vorteilhafter Weise befindet sich der für diese elektromagnetische Betätigung notwendige Magnetspalt 17 außerhalb des Flüssigkeitskanals 3 und ist zwischen der dem Flüssigkeitskanal 3 abgewandten Außenfläche des Ventilelementes 8, 8b und der benachbarten Fläche des Gehäuseteils 9 gebildet. Durch die elektromagnetische Betätigung des Ventilelementes 8 bzw. 8b ergibt sich ferner eine Vereinfachung der Steuerung der Flüssigkeitsventile 5 eines Füllsystems in konstruktiver und steuerungstechnischer Hinsicht, zumal z.B. pneumatische Komponenten, wie Druckluftaggregate, pneumatische Antriebselenente, elektro-pneumatische Ventile usw. vermieden sind. Ein Durchströmen des Magnetspaltes 17 mit Füllgut erfolgt nicht. Der Magnetspalt 17 kann daher u.a. mit reduzierter Spaltbreite ausgeführt werden, wodurch die elektromagnetische Betätigung des Ventilelementes 8 bzw. 8b zuverlässig und energiesparend erfolgen kann.

Vorstehend wurde davon ausgegangen, dass die Abschnitte 3.3 und 3.4 zwischen dem beweglichen Ventilelement 8 bzw. 8b und den festen Gehäuseteil 11 bzw. 21 in flexiblen Verbindungen oder Dichtungen 12 und 22 in Form von Faltenbalgdichtungen ausgebildet sind. Selbstverständlich sind auch andere konstruktive Maßnahmen möglich, mit denen das für das Öffnen und Schließen des Flüssigkeitsventils 5 erforderliche Bewegen des Ventilelementes 8 bzw. 8b bei gleichzeitig nach außen hin abgedichtetem Flüssigkeitskanal 3 erreicht wird. Als flexible Dichtungen eignen sich beispielsweise auch Rollmembranen und schlauchartige flexible Leitungen.

### Bezugszeichenliste

- 1, 1a -1c: Füllelement
- 2: Behälter
- 3: Flüssigkeitskanal
- 3.1 - 3.4: Abschnitt des Flüssigkeitskanals
- 4: Abgabeöffnung
- 5: Flüssigkeitsventil
- 6: Ventilkörper
- 6.1, 6.2: Abschnitt des Ventilkörpers
- 7: Ventilsitz
- 8, 8b: Ventilelement
- 9: Gehäuseteil
- 10: Verbindungselement oder Verbindungsstange
- 11: Gehäuseteil
- 12: flexible Verbindung oder Dichtung
- 13: Steg
- 14: elektromagnetischer Antrieb
- 15: Magnetspulenanordnung
- 15.1, 15.2: Magnetspule oder Ringspule
- 16: Element am Ventilelement oder Permanentmagnet
- 17: Magnetspalt
- 18: elektromagnetischer Antrieb oder Linearantrieb
- 19.1: Element am Ventilelement oder Magnetpolanordnung
- 19.2: elektromagnetische Wicklung oder Statorwicklung
- 20: Gassperre
- 21: Gehäuseteil
- 22: flexible Dichtung oder Faltenbalg
- FA: Ventil- oder Hubachse

## Patentansprüche

1. Füllelement zur gesteuerten Abgabe eines flüssigen Füllgutes in Packmittel (2) über wenigstens eine an einer Unterseite des Füllelementes vorgesehene Abgabeöffnung (4) eines Flüssigkeitskanals(3), der innerhalb des Füllelementes (1, 1a - 1c) ausgebildet ist, sowie mit wenigstens einem Flüssigkeitsventil (5), welches zumindest zwischen einem die Abgabe des Füllgutes an die Packmittel (2) ermöglichenden geöffneten Zustand und einem Zustand steuerbar ist, der den Flüssigkeitskanal (3) und damit die Abgabe des Füllgutes sperrt, wobei das Flüssigkeitsventil (5) einen im Flüssigkeitskanal (3) angeordneten Ventilkörper (6) und zumindest ein wenigstens einen Teilabschnitt (3.2) des Flüssigkeitskanals (3) bildendes Ventilelement (8, 8b) aufweist, wobei das Ventilelement (8, 8b) durch einen Antrieb zum Öffnen und zum Schließen des Flüssigkeitsventils (5) oder wenigstens einer Ventilöffnung in Richtung einer Ventil- oder Hub-Achse (FA) relativ zum Ventilkörper (6) bewegbar ist, **dadurch gekennzeichnet, dass** der Antrieb zur Bewegung des Ventilelementes (8, 8b) ein magnetischer oder elektromagnetischer Antrieb (14, 18) ist, dessen Magnetfeld über einen außerhalb des Flüssigkeitskanals (3) angeordneten Magnetspalt (17) auf das Ventilelement (8, 8b) oder auf wenigstens ein an dem Ventilelement (8, 8b) vorgesehenes Element (16, 19.1) des magnetischen oder elektromagnetischen Antriebs (14, 18) einwirkt,
wobei dessen Magnetfeld unmittelbar auf das, den Ventilsitz bildende oder aufweisende und rohrstückartig oder als Mantelrohr ausgebildete Ventilelement einwirkt, wobei das Ventilelement oder ein am Ventilelement vorgesehenes Element den Läufer des magnetischen oder elektromagnetischen Antriebs (14,18) bildet.

2. Füllelement nach Anspruch 1, **dadurch gekennzeichnet, dass** ein Stator des elektromagnetischen Antriebs (14, 18) zumindest zum Teil an einem mit dem Ventilelement (8, 8b) nicht mitbewegten Gehäuseteil (9) des Füllelementes (1, 1a - 1c) vorgesehen ist.

3. Füllelement nach einem der vorhergehenden Ansprüche, **dadurch gekennzeichnet, dass** der wenigstens eine Magnetspalt (17) an einer dem Flüssigkeitskanal (3) abgewandten Außenfläche des Ventilelementes (8, 8b) gebildet ist.

4. Füllelement nach einem der vorhergehenden Ansprüche, **dadurch gekennzeichnet, dass** die wenigstens eine Ventilöffnung zwischen einem Ventilkörperabschnitt (6.1) des Ventilkörpers (6) und einem mit dem Ventilelement (8, 8b) bewegten oder an diesem Ventilelement (8 8b) vorgesehenen Ventilsitz (7) gebildet ist.

5. Füllelement nach Anspruch 2, **dadurch gekennzeichnet, dass** der Stator des magnetischen oder elektromagnetischen Antriebs (14) in Form einer Magnetspulenanordnung (15) mit wenigstens zwei Magnetspulen (15.1, 15.2) ausgebildet ist und dass die Magnetspulen (15.1, 15.2) in der Ventil- oder Hub-Achse (FA) gegen einander derart versetzt sind, dass beim Aktivieren einer Magnetspule (15.2) das Flüssigkeitsventil (5) öffnet und beim Aktivieren der anderen Magnetspule (15.1) das Flüssigkeitsventil (5) schließt, und dass die Magnetspulen (15.1, 15.2) vorzugsweise die Ventil- oder Hub-Achse (FA) umschließende, bevorzugt konzentrisch umschließende Ringspulen sind.

6. Füllelement nach Anspruch 5, **dadurch gekennzeichnet, dass** das an dem Ventilelement (8, 8b) vorgesehene Element (16) des elektromagnetischen Antriebs (14) durch einen Permanentmagneten gebildet ist, wobei die Magnetspulen (15.1, 15.2) über den Magnetspalt (17) auf den vorgesehenen Permanentmagneten einwirken.

7. Füllelement nach Anspruch 2, **dadurch gekennzeichnet, dass** der Stator des als Linearantrieb ausgebildeten elektromagnetischen Antriebs (18) durch zumindest eine elektromagnetische Wicklung (19.2) gebildet ist und dass das Ventilelement (8, 8b) oder das an dem Ventilelement (8, 8b) vorgesehene Element (19.1) einen dem Stator an dem wenigstens einen Magnetspalt (17) gegenüber liegenden Läufer bildet, wobei das an dem Ventilelement (8, 8b) vorgesehene Element (19.1) eine Magnetpolanordnung ist, die mit der elektromagnetische Wicklung (19.2) zusammenwirkt.

8. Füllelement nach einem der vorhergehenden Ansprüche, **dadurch gekennzeichnet, dass** der Magnetspalt (17) zur Gleitführung für das Ventilelement (8, 8b) dient.

9. Füllelement nach einem der vorhergehenden Ansprüche, **dadurch gekennzeichnet, dass** das Ventilelement (8, 8b) und ein in diesem Ventilelement (8, 8b) ausgebildeter Teilabschnitt (3.2) des Flüssigkeitskanals (3) über zumindest eine die Bewegung des Ventilelementes (8, 8b) ermöglichende, bewegliche und dichte Verbindung mit wenigstens einem zum Öffnen und Schließen des Flüssigkeitsventils (5) nicht bewegten Gehäuseteil (11, 21) oder mit einem am Gehäuseteil (11, 21) oder benachbart zum Gehäuseteil (11, 21) ausgebildeten Teilabschnitt (3.1, 3.3, 3.4) des Flüssigkeitskanals (3) verbunden ist, wobei diese Verbindung vorzugsweise von wenigstens einer schlauchartigen flexiblen Leitung, einer flexiblen Dichtung (12, 22), bevorzugt von wenigstens einer Faltenbalgdichtung, einem Faltenbalg und/oder einer Rollmembrane gebildet ist.

10. Füllelement nach einem der vorhergehenden Ansprüche, **dadurch gekennzeichnet, dass** die wenigstens eine Abgabeöffnung (4) an dem Ventilelement (8, 8b) oder an einem zum Öffnen und Schließen des Flüssigkeitsventils (5) nicht bewegten Gehäuseteil (21) vorgesehen ist.

11. Füllelement nach Anspruch 4, **dadurch gekennzeichnet, dass** der mit dem Ventilkörperabschnitt (6.1) zusammenwirkende Ventilsitz (7) innerhalb des Ventilelementes (8, 8b) vorgesehen ist und von einem die wenigstens eine Abgabeöffnung (4) bildenden oder diese Abgabeöffnung (4) näher liegenden Ende bezogen auf die Ventil- oder Hub-Achse (FA) einen axialen Abstand aufweist, der kleiner ist als die axiale Länge des Ventilelementes (8, 8b), beispielsweise kleiner ist als die halbe axiale Länge des Ventilelementes oder aber größer ist als die halbe axiale Länge des Ventilelementes (8b).

12. Füllelement nach einem der vorhergehenden Ansprüche, **dadurch gekennzeichnet, dass** an der wenigstens einen Abgabeöffnung (4) eine Gassperre (20) vorgesehen ist.

13. Füllelement nach einem der vorhergehenden Ansprüche, **dadurch gekennzeichnet, dass** das Füllelement (1, 1a - 1c) als Doppel- oder Mehrfachfüllelement ausgebildet ist.

14. Füllelement nach Anspruch 13, **dadurch gekennzeichnet, dass** mehrere Ventilelemente (8, 8b) über nur einen magnetischen oder elektromagnetischen Antrieb (14, 18) insbesondere über einen als Linearantrieb ausgebildeten elektromagnetischen Antrieb (18) bewegbar sind.

15. Füllsystem oder Füllmaschine zum Befüllen von Packmitteln mit einem flüssigen Füllgut, mit wenigstens einem Füllelement (1, 1a - 1c), **dadurch gekennzeichnet, dass** das Füllelement (1, 1a - 1c) nach einem der vorhergehenden Ansprüche ausgebildet ist.

## Claims

1. Filling element for the controlled dispensing of liquid filling contents into packages (2) via at least one dispensing opening (4) of a liquid channel (3) provided on an under side of the filling element, which is formed inside the filling element (1, 1a-1c), and with at least one liquid valve (5) that can be controlled at least between an open state in which the dispensing of the liquid contents to the package (2) is enabled, and a state which blocks the liquid channel (3) and therefore the dispensing of the liquid contents, wherein the liquid valve (5) comprises a valve body (6) arranged in the liquid channel (3) and at least one valve element (8, 8b) forming a part section (3.2) of the liquid channel (3), wherein the valve element (8, 8b) can be moved by means of a drive for the opening and closing of the liquid valve (5) or of at least one valve opening in the direction of a valve axis or stroke axis (FA) relative to the valve body (6), **characterised in that** the drive for moving the valve element (8, 8b) is a magnetic or electromagnetic drive (14, 18), of which the magnetic field takes effect, via a magnetic gap (17) arranged outside the liquid channel (3), on the valve element (8, 8b) or on at least one element (16, 19.1) provided at the valve element (8, 8b) of the magnetic or electromagnetic drive (14, 18), wherein
the magnetic field of which takes effect directly on the valve element forming the valve seat or comprising a valve element in the form of a tube, or configured as a jacket tube, wherein the valve element or an element provided at the valve element forms the rotor of the magnetic or electromagnetic valve (14, 18).

2. Filling element according to claim 1, **characterised in that** a stator of the electromagnetic drive (14, 18) is provided at least in part at a housing part (9) of the filling element (1, 1a-1c) which is not moved with the valve element (8, 8b).

3. Filling element according to any one of the preceding claims, **characterised in that** the at least one magnetic gap (17) is formed on an outer surface of the valve element (8, 8b) facing away from the liquid channel (3).

4. Filling element according to any one of the preceding claims, **characterised in that** the at least one valve opening is formed between a valve body section (6.1) of the valve body (6) and a valve seat (7) moved with the valve element (8, 8b) or provided at this valve element (8, 8b).

5. Filling element according to claim 2, **characterised in that** the stator of the magnetic or electromagnetic valve (14) is configured in the form of a magnetic coil arrangement (15) with at least two magnetic coils (15.1, 15.2), and that the magnetic coils (15.1, 15.2) are arranged in the valve axis or stroke axis (FA) offset against one another in such a way that, on activation of one magnetic coil (15.2) the liquid valve (5) opens, and on activation of the other magnetic coil (15.1) the liquid valve (5) closes, and that the magnetic coils (15.1, 15.2) are preferably ring coils surrounding the valve axis or stroke axis (FA), preferably surrounding them concentrically.

6. Filling element according to claim 5, **characterised in that** the element (16) of the electromagnetic drive (14), provided at the valve element (8, 8b), is formed by a permanent magnetic, wherein the magnetic coils (15.1, 15.2) takes effect via the magnetic gap (17) on the permanent magnets provided.

7. Filling element according to claim 2, **characterised in that** the stator of the electromagnetic drive (18), configured as a linear drive, is formed by at least one electromagnetic winding (19.2), and that the valve element (8, 8b) or the element (19.1) provided at the valve element (8, 8b) forms a stator, located opposite the stator at the at least one magnetic gap (17), wherein the element (19.1) provided at the valve element (8, 8b) is a magnetic pole arrangement, which interacts with the electromagnetic coil (19.2).

8. Filling element according to any one of the preceding claims, **characterised in that** the magnetic gap (17) serves as a slide guide for the valve element (8, 8b).

9. Filling element according to any one of the preceding claims, **characterised in that** the valve element (8, 8b), and a part section (3.2) of the liquid channel (3) formed in this valve element (8, 8b) is connected, by means of at least one movable and tight sealed connection which enables the movement of the valve element (8, 8b), to at least one housing part (11,21) which is not moved for the opening and closing of the liquid valve (5), or to a part section (3.1, 3.3, 3.4) of the liquid channel (3) formed at the housing part (11, 21) or adjacent to the housing part (11, 21), wherein this connection is preferably formed by at least one loop-shaped flexible line, a flexible seal (12, 22), preferably by at least one folding bellows seal, a folding bellows, and or a roller diaphragm.

10. Filling element according to any one of the preceding claims, **characterised in that** the at least one dispensing opening (4) is provided at the valve element (8, 8b) or at a housing part (21) which is not moved for the opening and closing of the liquid valve (5).

11. Filling element according to claim 4, **characterised in that** the valve seat (7) interacting with the valve body section (6.1) is arranged inside the valve element (8, 8b), and exhibits an axial spacing interval from an end forming the dispensing opening (4) or located closer to this dispensing opening (4), relative to the valve axis or stroke axis (FA), which is smaller than the axial length of the valve element (8, 8b), for example smaller than half the axial length of the valve element, or, however, is larger than half the axial length of the valve element (8b).

12. Filling element according to any one of the preceding claims, **characterised in that** a gas block (20) is provided at the at least one dispensing opening (4).

13. Filling element according to any one of the preceding claims, **characterised in that** the filling element (1, 1a-1c) is configured as a double or multiple filling element.

14. Filling element according to claim 13, **characterised in that** several valve elements (8, 8b) can be moved by means of only one magnetic or electromagnetic drive (14, 18), in particular by an electromagnetic drive configured as a linear drive (18).

15. Filling system or filling machine for filling packages with a liquid product, with at least one filling element (1, 1a-1c), **characterised in that** the filling element (1, 1a-1c) is configured in accordance with any one of the preceding claims.

## Revendications

1. Elément de remplissage servant à distribuer de manière commandée un produit de remplissage liquide dans des moyens d'emballage (2) par l'intermédiaire d'au moins une ouverture de distribution (4), prévue au niveau d'un côté inférieur de l'élément de remplissage, d'un canal de liquide (3), qui est réalisé à l'intérieur de l'élément de remplissage (1, 1a - 1c), ainsi qu'avec au moins une soupape de liquide (5), laquelle peut être commandée au moins entre un état ouvert permettant la distribution du produit de remplissage aux moyens d'emballage (2) et un état qui bloque le canal de liquide (3) et, ainsi, la distribution du produit de remplissage, dans lequel la soupape de liquide (5) présente un corps de soupape (6) disposé dans le canal de liquide (3) et au moins un élément de soupape (8, 8b) formant au moins une section partielle (3.2) du canal de liquide (3), dans lequel l'élément de soupape (8, 8b) peut être déplacé par un entraînement pour ouvrir et pour fermer la soupape de liquide (5) ou au moins une ouverture de soupape en direction d'un axe de soupape ou de levage (FA) par rapport au corps de soupape (6), **caractérisé en ce que** l'entraînement servant au déplacement de l'élément de soupape (8, 8b) est un entraînement magnétique ou électromagnétique, dont le champ magnétique agit, par l'intermédiaire d'un entrefer magnétique (17) disposé à l'extérieur du canal de liquide (3), sur l'élément de soupape (8, 8b) ou sur au moins un élément (16, 19.1), prévu au niveau de l'élément de soupape (8, 8b), de l'entraînement (14, 18) magnétique ou électromagnétique,
dans lequel son champ magnétique agit directement sur l'élément de soupape formant ou présentant le siège de soupape et réalisé à la manière d'une pièce tubulaire ou en tant qu'un tuyau de gainage, dans lequel l'élément de soupape ou un élément prévu au niveau de l'élément de soupape forme le rotor de l'entraînement (14, 18) magnétique ou électromagnétique.

2. Elément de remplissage selon la revendication 1, **caractérisé en ce qu'**un stator de l'entraînement (14, 18) électromagnétique est prévu au moins en partie au niveau d'une partie de boîtier (9), non déplacée conjointement avec l'élément de soupape (8, 8b), de l'élément de remplissage (1, 1a - 1c).

3. Elément de remplissage selon l'une quelconque des revendications précédentes, **caractérisé en ce que** l'au moins un entrefer magnétique (17) est formé au niveau d'une surface extérieure, opposée au canal de liquide (3), de l'élément de soupape (8, 8b).

4. Elément de remplissage selon l'une quelconque des revendications précédentes, **caractérisé en ce que** l'au moins une ouverture de soupape est formée entre une section de corps de soupape (6.1) du corps de soupape (6) et un siège de soupape (7) déplacé avec l'élément de soupape (8, 8b) ou prévu au niveau dudit élément de soupape (8, 8b).

5. Elément de remplissage selon la revendication 2, **caractérisé en ce que** le stator de l'entraînement (14) magnétique ou électromagnétique est réalisé sous la forme d'un ensemble de bobines magnétiques (15) avec au moins deux bobines magnétiques (15.1, 15.2), et que les bobines magnétiques (15.1, 15.2) sont décalées les unes à l'encontre des autres dans l'axe de soupape ou de levage (FA) de telle manière que lors de l'activation d'une bobine magnétique (15.2), la soupape de liquide (5) s'ouvre et lors de l'activation de l'autre bobine magnétique (15.1), la soupape de liquide (5) se ferme, et que les bobines magnétiques (15.1, 15.2) sont de préférence des bobines annulaires entourant, de manière préférée entourant de manière concentrique, de préférence l'axe de soupape ou de levage (FA).

6. Elément de remplissage selon la revendication 5, **caractérisé en ce que** l'élément (16), prévu au niveau de l'élément de soupape (8, 8b), de l'entraînement (14) électromagnétique est formé par un aimant permanent, dans lequel les bobines magnétiques (15.1, 15.2) agissent par l'intermédiaire de l'entrefer magnétique (17) sur l'aimant permanent prévu.

7. Elément de remplissage selon la revendication 2, **caractérisé en ce que** le stator de l'entraînement (18) électromagnétique réalisé en tant qu'entraînement linéaire est formé par au moins un enroulement (19.2) électromagnétique, et que l'élément de soupape (8, 8b) ou l'élément (19.1) prévu au niveau de l'élément de soupape (8, 8b) forme un rotor faisant face au stator au niveau de l'au moins un entrefer magnétique (17), dans lequel l'élément (19.1) prévu au niveau de l'élément de soupape (8, 8b) est un ensemble de pôles magnétiques, qui coopère avec l'enroulement (19.2) électromagnétique.

8. Elément de remplissage selon l'une quelconque des revendications précédentes, **caractérisé en ce que** l'entrefer magnétique (17) sert au guidage par glissement pour l'élément de soupape (8, 8b).

9. Elément de remplissage selon l'une quelconque des revendications précédentes, **caractérisé en ce que** l'élément de soupape (8, 8b) et une section partielle (3.2), réalisée dans ledit élément de soupape (8, 8b), du canal de liquide (3) sont reliés, par l'intermédiaire d'au moins une liaison mobile et étanche permettant le déplacement de l'élément de soupape (8, 8b), à au moins une partie de boîtier (11, 21) non déplacée pour ouvrir et fermer la soupape de liquide (5) ou à une section partielle (3.1, 3.3, 3.4), réalisée au niveau de la partie de boîtier (11, 21) ou de manière adjacente par rapport à la partie de boîtier (11, 21), du canal de liquide (3), dans lequel ladite liaison est formée de préférence par au moins un conduit souple de type tuyau flexible, un joint d'étanchéité (12, 22) souple, de manière préférée par au moins un joint d'étanchéité à soufflet, un soufflet et/ou une membrane roulante.

10. Elément de remplissage selon l'une quelconque des revendications précédentes, **caractérisé en ce que** l'au moins une ouverture de distribution (4) est prévue au niveau de l'élément de soupape (8, 8b) ou au niveau d'une partie de boîtier (21) non déplacée pour ouvrir et fermer la soupape de liquide (5).

11. Elément de remplissage selon la revendication 4, **caractérisé en ce que** le siège de soupape (7) coopérant avec la section de corps de soupape (6.1) est prévu à l'intérieur de l'élément de soupape (8, 8b) et présente par rapport à une extrémité formant l'au moins une ouverture de distribution (4) ou située davantage à proximité de ladite ouverture de distribution (4) par rapport à l'axe de soupape ou de levage (FA) une distance axiale, qui est inférieure à la longueur axiale de l'élément de soupape (8, 8b), par exemple est inférieure à la moitié de la longueur axiale de l'élément de soupape ou est toutefois supérieure à la moitié de la longueur axiale de l'élément de soupape (8b).

12. Elément de remplissage selon l'une quelconque des revendications précédentes, **caractérisé en ce qu'**une barrière de gaz (20) est prévue au niveau de l'au moins une ouverture de distribution (4).

13. Elément de remplissage selon l'une quelconque des revendications précédentes, **caractérisé en ce que** l'élément de remplissage (1, 1a - 1c) est réalisé en tant qu'élément de remplissage double ou multiple.

14. Elément de remplissage selon la revendication 13, **caractérisé en ce que** plusieurs éléments de soupape (8, 8b) peuvent être déplacés par l'intermédiaire de seulement un entraînement (14, 18) magnétique ou électromagnétique en particulier par l'intermédiaire d'un entraînement (18) électromagnétique réalisé en tant qu'entraînement linéaire.

15. Système de remplissage ou machine de remplissage servant à remplir des moyens d'emballage avec un produit de remplissage liquide, avec au moins un élément de remplissage (1, 1a - 1c), **caractérisé en ce que** l'élément de remplissage (1, 1a - 1c) est réalisé selon l'une quelconque des revendications précédentes.
